(19) Europäisches Patentamt
European Patent Office
Office européen des brevets

(11) **EP 2 749 602 B1**

(12) **EUROPEAN PATENT SPECIFICATION**

(45) Date of publication and mention of the grant of the patent:
**05.10.2016 Bulletin 2016/40**

(51) Int Cl.:
***C08L 75/00*** (2006.01)   ***C08K 5/053*** (2006.01)
***C09D 11/10*** (2006.01)   ***C09D 175/02*** (2006.01)

(21) Application number: **12826269.8**

(22) Date of filing: **22.06.2012**

(86) International application number:
**PCT/JP2012/065954**

(87) International publication number:
**WO 2013/027481 (28.02.2013 Gazette 2013/09)**

(54) **POLYURETHANE POLYUREA RESIN COMPOSITION, BINDER FOR PRINTING INKS, AND PRINTING INK**

POLYURETHAN-POLYHARNSTOFF-HARZZUSAMMENSETZUNG, BINDEMITTEL FÜR DRUCKTINTEN UND DRUCKTINTE

COMPOSITION DE RÉSINE DE POLYURÉTHANE-POLYURÉE, LIANT POUR ENCRES D'IMPRESSION ET ENCRE D'IMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2011 JP 2011182560**

(43) Date of publication of application:
**02.07.2014 Bulletin 2014/27**

(73) Proprietor: **DIC Corporation**
**Tokyo 174-8520 (JP)**

(72) Inventors:
• **NAKAI Takashi**
  **Tokyo 174-8520 (JP)**
• **MIOKAWA Masazumi**
  **Ichihara-shi**
  **Chiba 290-8585 (JP)**

(74) Representative: **TBK**
  **Bavariaring 4-6**
  **80336 München (DE)**

(56) References cited:
**JP-A- H09 118 855    JP-A- 2003 221 539**
**JP-A- 2007 238 953    JP-A- 2007 238 953**

## Description

The present invention relates to polyurethane polyurea resin compositions that have high storage stability without changes over time such as turbidity, coloration, and a decrease in viscosity.

Background Art

Polyurethane polyurea resins are frequently used as binder resins for printing inks and coatings. For example, gravure printing inks containing polyurethane polyurea resins are frequently used for printing on plastic films for packaging various products such as confectionery and food. Polyurethane polyurea resins often contain solvents such as toluene and ketones, in which these resins are highly soluble. Recently, these solvents have increasingly been replaced by alcohol solvents and ester solvents with the revision of the Industrial Safety and Health Law and the increasing awareness of work environments. Polyurethane polyurea resins containing alcohol and ester solvents, however, have a problem in that they have low storage stability because their viscosity tends to decrease over time. The decrease in viscosity is attributed to the fact that water contained in the ester and alcohol solvents reacts with amino groups in the polyurethane polyurea resins to produce hydroxide ions, which cleave ester bonds in the polyurethane polyurea resins.

As a method for preventing the decrease in viscosity over time, a technique is known in which malic acid is added to a resin composition containing a polyurethane polyurea resin and a mixture of ethyl acetate of isopropyl alcohol to inhibit the activity of amino groups, thereby reducing the decrease in viscosity (see PTL 1). However, although this reduces the decrease in viscosity over time, the resin composition becomes turbid over time and also has an odor. In addition, an ink prepared from the resin composition colors over time.

Citation List

Patent Literature

PTL 1: Japanese Unexamined Patent Application Publication No. 2003-221539 (Japanese Patent No. 3972666)

Summary of Invention

Technical Problem

Accordingly, an object of the present invention is to provide a polyurethane polyurea resin composition that has high storage stability without a decrease in viscosity or turbidity over time and a printing ink that has high storage stability without a decrease in viscosity or coloration over time.

Solution to Problem

After conducting intensive research to achieve the above object, the inventors have found that the addition of a polyhydroxymonocarboxylic acid having an acid value of 340 to 500 mg KOH/g and a hydroxyl value of 680 to 1,300 mg KOH/g to a resin composition containing a polyurethane polyurea resin and ester and alcohol solvents provides a resin composition that has high storage stability without changes over time such as a decrease in viscosity and turbidity. The inventors have also found that a printing ink prepared using the polyurethane polyurea resin composition as a binder has high storage stability without a decrease in viscosity or coloration over time. These and other findings have led to the present invention.

Specifically, the present invention relates to a resin composition containing, as essential components, a polyurethane polyurea resin (A), a polyhydroxymonocarboxylic acid (B) having an acid value of 340 to 500 mg KOH/g and a hydroxyl value of 680 to 1,300 mg KOH/g, and at least one solvent selected from the group consisting of an ester solvent (C1) and an alcohol solvent (C2), wherein the polyhydroxymonocarboxylic acid (B) is present in an amount of 0.03 to 5 parts by mass based on 100 parts by mass of nonvolatile matter in the polyurethane polyurea resin (A).

The present invention also relates to a printing ink binder containing the resin composition.

The present invention also relates to a printing ink containing the printing ink binder.

Advantageous Effects of Invention

The present invention can provide a resin composition that has high storage stability without changes over time such as a decrease in viscosity and turbidity as compared to known polyurethane polyurea resin compositions. The present invention can also provide a printing ink that has high storage stability without changes over time such as a decrease in viscosity and coloration.

Description of Embodiments

According to the present invention, a polyhydroxymonocarboxylic acid (B) is added to a resin composition containing a polyurethane polyurea resin (A) and at least one solvent selected from the group consisting of an ester solvent (C1) and an alcohol solvent (C2) to prevent a decrease in the viscosity of the resin composition over time. Generally, a polyurethane polyurea resin composition containing these solvents exhibits a decrease in viscosity as water contained in the ester and alcohol solvents reacts with amino groups in the polyurethane polyurea resin to produce hydroxide ions, which cleave ester bonds in the polyurethane polyurea resin. The addition of the polyhydroxymonocarboxylic acid, however, causes the amino groups to form a salt with the polyhydroxymonocarboxylic acid. This inhibits the reaction of the amino groups with water and thus prevents a decrease in viscosity.

The polyurethane polyurea resin (A) used in the present invention will be described first.

The polyurethane polyurea resin (A) can be prepared, for example, by reacting a polyol compound (a1) with a polyisocyanate compound (a2) such that the number of moles of isocyanate groups in the polyisocyanate compound exceeds the number of moles of hydroxyl groups in the polyol compound to prepare an isocyanate-containing prepolymer and then reacting the isocyanate groups in the prepolymer with a polyamine compound (a3).

The polyol compound (a1) used as a reactant material for the polyurethane polyurea resin (A) may be a diol compound (a1-1), which has two hydroxyl groups in the molecular structure thereof, or a polyol compound (a1-2), which has three or more hydroxyl groups in the molecular structure thereof.

Examples of diol compounds (a1-1) include aliphatic diols such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl-1,5-pentanediol, neopentyl glycol, 1,6-hexanediol, and 2,2,4-trimethyl-1,3-pentanediol;

polyether diols such as polyoxyethylene glycol and polyoxypropylene glycol;

alicyclic diols such as 1,4-cyclohexanedimethanol and hydrogenated bisphenol A;

modified polyether diols prepared by ring-opening polymerization of the aliphatic diols with various cyclic-ether-bond containing compounds such as ethylene oxide, propylene oxide, tetrahydrofuran, ethyl glycidyl ether, propyl glycidyl ether, butyl glycidyl ether, phenyl glycidyl ether, and allyl glycidyl ether;

lactone polyester polyols prepared by polycondensation reactions of the aliphatic diols with various lactones such as ε-caprolactone; and

polyester diols prepared by co-condensation of the aliphatic diols with aliphatic dicarboxylic acids such as malonic acid, succinic acid, glutaric acid, adipic acid, azelaic acid, and sebacic acid; aromatic dicarboxylic acids such as phthalic acid (anhydride), terephthalic acid, isophthalic acid, and orthophthalic acid; alicyclic dicarboxylic acids such as hexahydrophthalic acid and 1,4-cyclohexanedicarboxylic acid; or aliphatic unsaturated dicarboxylic acids such as tetrahydrophthalic acid, maleic acid (anhydride), fumaric acid, citraconic acid, itaconic acid, and glutaconic acid.

Examples of polyol compounds (a1-2) include aliphatic polyols such as trimethylolethane, trimethylolpropane, glycerol, hexanetriol, and pentaerythritol;

modified polyether polyols prepared by ring-opening polymerization of the aliphatic polyols with various cyclic-ether-bond containing compounds such as ethylene oxide, propylene oxide, tetrahydrofuran, ethyl glycidyl ether, propyl glycidyl ether, butyl glycidyl ether, phenyl glycidyl ether, and allyl glycidyl ether;

lactone polyester polyols prepared by polycondensation reactions of the aliphatic polyols with various lactones such as ε-caprolactone;

polyester polyols prepared by co-condensation of the aliphatic polyols with aliphatic dicarboxylic acids such as malonic acid, succinic acid, glutaric acid, adipic acid, azelaic acid, and sebacic acid; aromatic dicarboxylic acids such as phthalic acid (anhydride), terephthalic acid, isophthalic acid, and orthophthalic acid; alicyclic dicarboxylic acids such as hexahydrophthalic acid and 1,4-cyclohexanedicarboxylic acid; or aliphatic unsaturated dicarboxylic acids such as tetrahydrophthalic acid, maleic acid (anhydride), fumaric acid, citraconic acid, itaconic acid, and glutaconic acid; and

polyester polyols prepared by co-condensation of the aliphatic diols or the aliphatic polyols with various tricarboxylic acids such as 1,2,5-hexanetricarboxylic acid, trimellitic acid, 1,2,5-benzenetricarboxylic acid, 1,2,4-cyclohexanetricarboxylic acid, and 2,5,7-naphthalenetricarboxylic acid.

The above polyol compounds (a1) may be used alone or in a combination of two or more. In particular, the diol compounds (a1-1) are preferred because the resulting polyurethane polyurea resin (A) is highly soluble in the ester solvent (C1) and the alcohol solvent (C2), and the polyester diols, the polyether diols, and the modified polyether diols are more preferred.

The polyisocyanate compound (a2) used as a reactant material for the polyurethane polyurea resin (A) may be a diisocyanate compound (a2-1), which has two isocyanate groups in the molecular structure thereof, or a polyisocyanate compound (a2-2), which has three or more isocyanate groups in the molecular structure thereof.

Examples of diisocyanate compounds (a2-1) include aliphatic diisocyanates such as butane-1,4-diisocyanate, hexamethylene diisocyanate, 2,2,4-trimethylhexamethylene diisocyanate, 2,4,4-trimethylhexamethylene diisocyanate, xylylene diisocyanate, and m-tetramethylxylylene diisocyanate;

alicyclic diisocyanates such as cyclohexane-1,4-diisocyanate, isophorone diisocyanate, lysine diisocyanate, dicyclohexylmethane-4,4'-diisocyanate, 1,3-bis(isocyanatomethyl)cyclohexane, methylcyclohexane diisocyanate, isopropylidenedicyclohexyl-4,4'-diisocyanate, and norbornane diisocyanate; and

aromatic diisocyanates such as 1,5-naphthylene diisocyanate, 4,4'-diphenylmethane diisocyanate, 4,4'-diphenyldimethylmethane diisocyanate, 4,4'-dibenzyl diisocyanate, dialkyldiphenylmethane diisocyanate, tetraalkyldiphenylmethane diisocyanate, 1,3-phenylene diisocyanate, 1,4-phenylene diisocyanate, tolylene diisocyanate, xylylene diisocyanate, and tetramethylxylylene diisocyanate.

Examples of polyisocyanate compounds (a2-2) include adduct-type polyisocyanate compounds, which have a urethane bond site in the molecule thereof, and nurate-type polyisocyanate compounds, which have an isocyanurate ring structure in the molecule thereof.

Adduct-type polyisocyanate compounds, which have a urethane bond site in the molecule thereof, are prepared, for example, by reacting a diisocyanate compound with a polyol compound. Examples of diisocyanate compounds used for the reaction include the various diisocyanate compounds illustrated as the diisocyanate compound (a2-1), which may be used alone or in a combination of two or more. Examples of polyol compounds used for the reaction include the various polyol compounds illustrated as the polyol compound (a1), which may be used alone or in a combination of two or more.

Nurate-type polyisocyanate compounds, which have an isocyanurate ring structure in the molecule thereof, are prepared, for example, by reacting a diisocyanate compound with a monoalcohol and/or a diol. Examples of diisocyanate compounds used for the reaction include the various diisocyanate compounds illustrated as the diisocyanate compound (a2-1), which may be used alone or in a combination of two or more. Examples of monoalcohols used for the reaction include hexanol, 2-ethylhexanol, octanol, n-decanol, n-undecanol, n-dodecanol, n-tridecanol, n-tetradecanol, n-pentadecanol, n-heptadecanol, n-octadecanol, n-nonadecanol, eicosanol, 5-ethyl-2-nonanol, trimethylnonyl alcohol, 2-hexyldecanol, 3,9-diethyl-6-tridecanol, 2-isoheptylisoundecanol, 2-octyldodecanol, and 2-decyltetradecanol. Examples of diols include the various diols illustrated as the diol compound (a1-1). These monoalcohols and diols may be used alone or in a combination of two or more.

The above polyisocyanate compounds (a2) may be used alone or in a combination of two or more. In particular, the diisocyanate compounds (a2-1) are preferred because the resulting polyurethane polyurea resin (A) is highly soluble in the ester solvent (C1) and the alcohol solvent (C2), and hexamethylene diisocyanate and isophorone diisocyanate are more preferred.

To prepare the isocyanate-containing prepolymer by reacting a diol compound (a1) with a diisocyanate compound (a2), they may be reacted, for example, such that the ratio [(OH)/(NCO)] of the number of moles (OH) of hydroxyl groups in the diol compound (a1) to the number of moles (NCO) of isocyanate groups in the diisocyanate compound (a2) is 1.0/1.1 to 1.0/5.0. The reaction may be effected in the temperature range of 60°C to 130°C, optionally in the presence of an urethanization catalyst such as tin(II) octanoate.

Examples of polyamine compounds (a3) used as a reactant material for the polyurethane polyurea resin (A) include diamine compounds such as ethylenediamine, propylenediamine, hexamethylenediamine, isophoronediamine, dicyclohexylmethane-4,4'-diamine, 2-hydroxyethylethylenediamine, 2-hydroxyethylpropylenediamine, di-2-hydroxyethylethylenediamine, di-2-hydroxyethylpropylenediamine, 2-hydroxypropylethylenediamine, and di-2-hydroxypropylethylenediamine; triamine compounds such as diethylenetriamine and pentane-1,2,5-triamine; and tetramine compounds such as triethylenetetramine. These may be used alone or in a combination of two or more. In particular, diamine compounds are preferred because the resulting polyurethane polyurea resin (A) is highly soluble in the ester solvent (C1) and the alcohol solvent (C2), and ethylenediamine and isophoronediamine are more preferred.

To prepare the polyurethane polyurea resin (A) by reacting the isocyanate-containing prepolymer with a diamine compound (a3), they may be reacted, for example, by preparing a solution of the isocyanate-containing prepolymer in the ester solvent (C1) and/or the alcohol solvent (C2) and a solution of the diamine compound in the ester solvent (C1) and/or the alcohol solvent (C2) and adding the diamine solution dropwise to the prepolymer solution or adding the prepolymer solution dropwise to the diamine solution. The reaction may be effected, for example, in the temperature range of 40°C to 55°C, preferably such that the ratio [(NCO)/(NH$_2$)] of the number of moles (NCO) of isocyanate groups in the prepolymer to the number of moles (NH$_2$) of amino groups in the diamine is 1/0.7 to 1/1.3.

The reaction of the isocyanate-containing prepolymer with the diamine compound (a3) may be terminated by effecting a polymerization termination reaction.

The polymerization termination reaction may be effected, for example, by adding a monoamine compound, e.g., a dialkylamine such as di-n-butylamine, an aromatic amine such as benzylamine or dibenzylamine, or an alkanolamine such as diethanolamine, so that it reacts with the isocyanate groups remaining in the reaction system, or by heating the system to around 80°C so that the alcohol used as the solvent reacts with the isocyanate groups remaining in the system.

The polyurethane polyurea resin (A) preferably has a weight average molecular weight (Mw) of 5,000 to 200,000, more preferably 10,000 to 150,000, so that the resulting ink has superior properties such as fast drying, high blocking resistance, high coating strength, high oil resistance, and high pigment dispersibility.

In the present invention, the weight average molecular weight (Mw) is measured by gel permeation chromatography (GPC) under the following conditions.

Measurement system: HLC-8220 GPC available from Tosoh Corporation
Columns:

TSK-GUARDCOLUMN SuperHZ-L available from Tosoh Corporation
+ TSK-GEL SuperHZM-M available from Tosoh Corporation x 4

Detector: differential refractive index detector (RI)
Data processing: Multistation GPC-8020 model II available from Tosoh Corporation
Measurement conditions:

| Column temperature | 40°C |
| Solvent | tetrahydrofuran |
| Flow rate | 0.35 ml/min |

Standard: monodisperse polystyrene
Sample: microfiltered tetrahydrofuran solution with resin solids content of 0.2% by mass (100 $\mu$l)

The polyhydroxymonocarboxylic acid (B) used in the present invention is primarily added to prevent a decrease over time in the viscosity of the polyurethane polyurea resin composition of the present invention. In addition, various properties are required, including no turbidity over time, little odor, no thickening in a mixture of an ester solvent and an alcohol solvent, and no coloration over time of a printing ink prepared using the polyurethane polyurea resin composition as a binder.

The polyhydroxymonocarboxylic acid (B) has an acid value of 340 to 500 mg KOH/g and a hydroxyl value of 680 to 1,300 mg KOH/g. A polyhydroxymonocarboxylic acid (B) having an acid value of less than 340 mg KOH/g would be insufficiently effective in inhibiting a decrease in viscosity. A polyhydroxymonocarboxylic acid (B) having an acid value of more than 500 mg KOH/g would color the resulting ink over time. A polyhydroxymonocarboxylic acid (B) having a hydroxyl value of less than 680 mg KOH/g would be insufficiently effective in inhibiting a decrease in viscosity. A polyhydroxymonocarboxylic acid (B) having a hydroxyl value of more than 1,300 mg KOH/g would render the resin composition prone to thickening. In particular, a compound having an acid value of 360 to 450 mg KOH/g and a hydroxyl value of 730 to 900 mg KOH/g is more preferred because it is more effective in inhibiting a decrease in viscosity over time.

Examples of polyhydroxymonocarboxylic acids (B) include dihydroxymonocarboxylic acids such as 2,3-dihydroxybutyric acid, 2,3-dihydroxy-2-methylbutyric acid, 2,4-dihydroxybutyric acid, 3,4-dihydroxybutyric acid, 2,2-dihydroxybutanoic acid, 2,4-dihydroxybutanoic acid, 2-methylglyceric acid, 2-(hydroxymethyl)-3-hydroxypropionic acid, 2-(dihydroxymethyl)propionic acid, 2-deoxytetronic acid, 3-deoxytetronic acid, dimethylolpropionic acid, 2,2-dimethylolpropanoic acid, 2,3-dihydroxyvaleric acid, 2,3-dihydroxyisovaleric acid, 2,3-dihydroxy-3-methylbutyric acid, 2-hydroxymethyl-4-hydroxybutanoic acid, 2,4-dihydroxypentanoic acid, 3,5-dihydroxypentanoic acid, 3,4-dideoxypentonic acid, anglyceric acid, mevalonic acid, verrucarinic acid, pantoic acid, 2,4-dihydroxy-3,3-dimethylbutanoic acid, 2,3-dihydroxy-3-methylpentanoic acid, 2,4-dihydroxy-3-methylpentanoic acid, 3,5-dihydroxy-3-methylpentanoic acid, 5,6-dihydroxyhexanoic acid, 4,5-dihydroxyhexanoic acid, 2,6-dihydroxyhexanoic acid, 2,2-bis(hydroxymethyl)butanoic acid, 3,5-dihydroxy-2,3-dimethylpentanoic acid, 3,5-dihydroxy-3,4-dimethylpentanoic acid, 2,4-dihydroxy-2,4-dimethylpentanoic acid, 2-(1-hydroxyethyl)-4-hydroxypentanoic acid, 2,3-dihydroxy-2-isopropylbutanoic acid, and 1-(hydroxymethyl)-2-hydroxyethyl hydroxyacetate; and trihydroxymonocarboxylic acids such as threonic acid, erythronic acid, 2-methylthreonic acid, 2,3,4-trihydroxybutyric acid, 3-methyl-2,3,4-trihydroxybutyric acid, 3-deoxypentonic acid, 3-hydroxy-2,2-bis(hydroxymethyl)propionic acid, xyloisosaccharic acid, 3-deoxypentonic acid, 2-methylerythronic acid, 5-deoxyribonic acid, digitoxonic acid, 3,6-dideoxyhexonic acid, and 3,5,6-trihydroxyhexanoic acid. These may be used alone or in a combination of two or more. In particular, dihydroxymonocarboxylic acids are preferred because they are more effective in inhibiting a decrease in viscosity over time, and 2,2-bis(hydroxymethyl)butanoic acid and 2,2-dimethylolpropanoic acid are more preferred because they are also highly soluble in the polyurethane polyurea resin composition.

In the resin composition of the present invention, the polyhydroxymonocarboxylic acid (B) is present in an amount of 0.03 to 5 parts by mass based on 100 parts by mass of nonvolatile matter in the polyurethane polyurea resin (A) so that the polyhydroxymonocarboxylic acid (B) is more effective in inhibiting a decrease in viscosity over time. More preferably, the polyhydroxymonocarboxylic acid (B) is present in an amount of 0.05 to 1 part by mass so that the resulting ink has high adhesion to the substrate.

The solvent contained in the resin composition of the present invention is at least one solvent selected from the group consisting of the ester solvent (C1) and the alcohol solvent (C2). Generally, a polyurethane polyurea resin composition containing these solvents exhibits a decrease in viscosity as water contained in the ester and alcohol solvents reacts with amino groups in the polyurethane polyurea resin to produce hydroxide ions, which cleave ester bonds in the polyurethane polyurea resin. The present invention, however, can provide a polyurethane polyurea resin composition that has high storage stability without a decrease in viscosity over time even if any ester solvent or alcohol solvent is used.

Examples of ester solvents (C1) include ethyl acetate, normal propyl acetate, isopropyl acetate, normal butyl acetate, isobutyl acetate, sec-butyl acetate, and tert-butyl acetate. These may be used alone or in a combination of two or more. In particular, ethyl acetate and normal butyl acetate are preferred because the polyurethane polyurea resin (A) is highly soluble in these solvents.

Examples of alcohol solvents (C2) include methanol, ethanol, normal propyl alcohol, isopropyl alcohol, normal butanol, isobutanol, sec-butanol, and tert-butanol. These may be used alone or in a combination of two or more. In particular, ethanol and isopropyl alcohol are preferred because the polyurethane polyurea resin (A) is highly soluble in these solvents.

The ester solvent (C1) or the alcohol solvent (C2) may be used alone as the solvent in the present invention. It is preferred, however, to use a mixture of the ester solvent (C1) and the alcohol solvent (C2) in a mass ratio $[(C)/(D)]$ of 99/1 to 30/70, more preferably 80/20 to 50/50, so that the polyurethane polyurea resin (A) is highly soluble in the solvent and the resulting resin composition has low initial viscosity.

The resin composition of the present invention may optionally contain resins other than the polyurethane polyurea resin (A). Examples of such resins include nitrocellulose, chlorinated polyolefins such as chlorinated polyethylene and chlorinated polypropylene, chlorosulfonated polyolefins such as chlorosulfonated polypropylene, ethylene-vinyl acetate copolymer and chlorinated and chlorosulfonated derivatives thereof, maleic acid resin, and vinyl chloride-vinyl acetate copolymer.

The resin composition of the present invention may optionally contain various additives. Examples of additives include silica microparticles.

The resin composition of the present invention may be used for various applications, including binder resins for gravure printing inks and screen printing inks, binder resins for wood paints and automotive paints, binder resins for ink jet printing, and adhesives. In particular, the resin composition of the present invention is suitable for use as a binder resin for printing inks.

A printing ink of the present invention may be manufactured, for example, by mixing the resin composition of the present invention with various pigments and solvents such as ester and alcohol solvents and then milling and dispersing the mixture. Other materials may also be added to the printing ink of the present invention, including polyisocyanate compounds, additives such as antiblocking agents and plasticizers, and surfactants for improving the flowability and dispersibility of the ink. The printing ink preferably contains 3% to 50% by mass of nonvolatile matter so that it has high usability.

EXAMPLES

The present invention is further illustrated by the following specific examples of synthesis and implementation.

In the examples of the present invention, the number average molecular weight (Mn) and the weight average molecular weight (Mw) were measured by gel permeation chromatography (GPC) under the following conditions.

Measurement system: HLC-8220 available from Tosoh Corporation
Columns:

Guard Column $H_{XL}$-H available from Tosoh Corporation
+ TSKgel G5000$H_{XL}$ available from Tosoh Corporation
+ TSKgel G4000$H_{XL}$ available from Tosoh Corporation
+ TSKgel G3000$H_{XL}$ available from Tosoh Corporation
+ TSKgel G2000$H_{XL}$ available from Tosoh Corporation

Detector: differential refractive index detector (RI)

Data processing: SC-8010 available from Tosoh Corporation
Measurement conditions:

| | |
|---|---|
| Column temperature | 40°C |
| Solvent | tetrahydrofuran |
| Flow rate | 1.0 ml/min |

Standard: polystyrene
Sample: microfiltered tetrahydrofuran solution with resin solids content of 0.4% by weight (100 μl) Example of Manufacture 1 (Preparation of Polyurethane Polyurea Resin Solution A)

A four-necked flask equipped with a stirrer, a thermometer, a reflux condenser, and a nitrogen gas inlet tube was charged with 852.1 parts by mass of a polyester diol, with a number average molecular weight (Mn) of 2,000, prepared by reacting a mixture of 1,4-butanediol and 3-methyl-1,5-pentanediol (molar ratio = 1/1) with adipic acid and 107.4 parts by mass of hexamethylene diisocyanate. The mixture was reacted at 90°C under nitrogen flow for 5 hours to manufacture a prepolymer having a free isocyanate value (isocyanate group content) of 1.85% by mass. To the prepolymer was added 540 parts by mass of ethyl acetate to prepare a homogeneous urethane prepolymer solution. The urethane prepolymer solution was then added to a mixture of 36.2 parts by mass of isophoronediamine, 4.3 parts by mass of di-n-butylamine, 860 parts by mass of ethyl acetate, and 33 parts by mass of isopropyl alcohol. The mixture was reacted at 45°C with stirring for 5 hours to prepare polyurethane polyurea resin solution A. Polyurethane polyurea resin solution A thus prepared had a resin solids content of 30.2% by mass and a viscosity of 980 mPa·s (25°C) as measured by a B-type rotary viscometer ("TVB-10M" available from Toki Sangyo Co., Ltd.), and the resin solids portion had a weight average molecular weight (Mw) of 100,000.

Example of Manufacture 2 (Preparation of Polyurethane Polyurea Resin Solution B)

A system configured as in Example of Manufacture 1 was charged with 722 parts by mass of a polyester diol, with a number average molecular weight of 2,000, prepared by reacting 3-methyl-1,5-pentanediol with adipic acid and 192.3 parts by mass of isophorone diisocyanate. The mixture was reacted at 90°C under nitrogen flow for 5 hours to manufacture a prepolymer having a free isocyanate value of 4.6% by mass. To the prepolymer was added 586 parts by mass of normal propyl acetate to prepare a homogeneous urethane prepolymer solution. The urethane prepolymer solution was then added to a mixture of 79.2 parts by mass of isophoronediamine, 6.5 parts by mass of monoethanolamine, 930 parts by mass of normal propyl acetate, and 817 parts by mass of isopropyl alcohol. The mixture was reacted at 45°C with stirring for 5 hours to prepare polyurethane polyurea resin solution B. Polyurethane polyurea resin solution B thus prepared had a resin solids content of 30.0% by mass and a viscosity of 590 mPa·s (25°C) as measured by a B-type rotary viscometer ("TVB-10M" available from Toki Sangyo Co., Ltd.), and the resin solids portion had a weight average molecular weight (Mw) of 30,000.

Example of Manufacture 3 (Preparation of Polyurethane Polyurea Resin Solution C)

A system configured as in Example of Manufacture 1 was charged with 716 parts by mass of a polyester diol, with a number average molecular weight of 1,000, prepared by reacting a mixture of ethylene glycol and neopentyl glycol (molar ratio = 1/1) with adipic acid and 227 parts by mass of isophorone diisocyanate. The mixture was reacted at 90°C under nitrogen flow for 10 hours to manufacture a prepolymer having a free isocyanate value of 2.7% by mass. To the prepolymer was added 557 parts by mass of ethyl acetate to prepare a homogeneous urethane prepolymer solution. The urethane prepolymer solution was then added to a mixture of 57 parts by mass of isophoronediamine, 843 parts by mass of ethyl acetate, and 933 parts by mass of isopropyl alcohol. The mixture was reacted at 45°C with stirring for 7 hours to prepare polyurethane polyurea resin solution C. Polyurethane polyurea resin solution C thus prepared had a resin solids content of 30.4% by mass and a viscosity of 2,230 mPa·s (25°C) as measured by a B-type rotary viscometer ("TVB-10M" available from Toki Sangyo Co., Ltd.), and the resin solids portion had a weight average molecular weight (Mw) of 63,000.

Example of Manufacture 4 (Preparation of Polyurethane Polyurea Resin Solution D)

A system configured as in Example of Manufacture 1 was charged with 772 parts by mass of a polyester diol, with a number average molecular weight of 2,000, prepared by reacting 3-methyl-1,5-pentanediol with adipic acid and 167.1 parts by mass of isophorone diisocyanate. The mixture was reacted at 90°C under nitrogen flow for 5 hours to manufacture a prepolymer having a free isocyanate value of 3.2% by mass. To the prepolymer was added 1,750 parts by mass of ethyl acetate to prepare a homogeneous urethane prepolymer solution. To the urethane prepolymer solution at 45°C were added 583 parts by mass of isopropyl alcohol, 54 parts by mass of isophoronediamine, and 6.9 parts by mass of di-n-butylamine. The mixture was reacted at 45°C with stirring for 7 hours to prepare polyurethane polyurea resin solution D. Polyurethane polyurea resin solution D thus prepared had a resin solids content of 30.2% by mass and a viscosity of 550 mPa·s (25°C) as measured by a B-type rotary viscometer ("TVB-10M" available from Toki Sangyo Co., Ltd.), and the resin solids portion had a weight average molecular weight (Mw) of 48,000.

Hydroxycarboxylic Acid Compounds Used in Examples and Comparative Examples

2,2-Bis(hydroxymethyl)butanoic acid: acid value = 379 mg KOH/g, hydroxyl value = 758 mg KOH/g
2,2-Dimethylolpropanoic acid: acid value = 418 mg KOH/g, hydroxyl value = 837 mg KOH/g
Malic acid: acid value = 837 mg KOH/g, hydroxyl value = 418 mg KOH/g

Example 1-1

Resin solution (1-1) was prepared by mixing 100 parts by mass of polyurethane polyurea resin solution A prepared in Example of Manufacture 1 with 0.05 part by mass of 2,2-bis(hydroxymethyl)butanoic acid. Resin solution (1-1) was evaluated for performance by the following various tests. The results are shown in Table 1.

Thickening Test

The initial viscosity of resin solution (1-1) and the viscosity after the addition of the hydroxycarboxylic acid compound were measured by a B-type rotary viscometer ("TVB-10M" available from Toki Sangyo Co., Ltd.). The viscosity change was calculated and was rated on the following scale:

$$\text{Viscosity change (\%)} = [\text{viscosity after addition of hydroxycarboxylic acid compound (mPa·s) / initial viscosity (mPa·s)}] \times 100$$

Good: Viscosity change is 105% or less
Fair: Viscosity change is 115% or less
Poor: Viscosity change is more than 115%

Storage Stability Test

The initial viscosity of resin solution (1-1) and the viscosity after storage in a sealed container at 40°C for 1 month were measured by a B-type rotary viscometer ("TVB-10M" available from Toki Sangyo Co., Ltd.). The viscosity change was calculated and was rated on the following scale:

$$\text{Viscosity change (\%)} = [\text{viscosity after storage at 40°C for 1 month (mPa·s) / initial viscosity (mPa·s)}] \times 100$$

Good: Viscosity change is 90% or more
Fair: Viscosity change is 70% to less than 90%
Poor: Viscosity change is less than 70%

Turbidity Test

The turbidity of resin solution (1-1) after storage in a sealed container at 40°C for 1 month was rated on the following scale:

Good: Not turbid
Poor: Turbid

Odor Test

The odor of resin solution (1-1) was rated on the following scale:

Good: Smells no acidic odor
Poor: Smells acidic odor

Examples (1-2) to (1-7)

Resin solutions (1-2) to (1-7) were prepared as in Example 1-1 except that the resin solutions were formulated as shown in Table 1 and were rated as in Example 1-1. The results are shown in Table 1.

Comparative Examples (1-1) to (1-7)

Resin solutions (1-8) to (1-14) were prepared as in Example 1-1 except that the resin solutions were formulated as shown in Table 2 and were rated as in Example 1-1. The results are shown in Table 2.

[Table 1]

| | Example 1-1 | Example 1-2 | Example 1-3 | Example 1-4 | Example 1-5 | Example 1-6 | Example 1-7 |
|---|---|---|---|---|---|---|---|
| Resin solution | 1-1 | 1-2 | 1-3 | 1-4 | 1-5 | 1-6 | 1-7 |
| Polyurethane polyurea resin solution A (parts by mass) | 100 | 100 | 100 | 100 | | | |
| Polyurethane polyurea resin solution B (parts by mass) | | | | | 100 | | |
| Polyurethane polyurea resin solution C (parts by mass) | | | | | | 100 | |
| Polyurethane Polyurea resin solution D (parts by mass) | | | | | | | 100 |
| 2,2-Bis(hydroxymethyl)butanoic acid (parts by mass) | 0.05 | 0.1 | 0.5 | | 0.1 | 0.1 | 0.1 |
| 2,2-Dimethylolpropanoic acid (parts by mass) | | | | 0.1 | | | |
| Initial viscosity (mPa·s) | 980 | 980 | 980 | 980 | 590 | 2230 | 550 |
| Viscosity after addition of hydroxycarboxylic acid (mPa·s) | 990 | 1010 | 1000 | 1000 | 610 | 2260 | 560 |
| Thickening (number in parentheses indicates viscosity change (%)) | Good (101) | Good (103) | Good (102) | Good (102) | Good (103) | Good (101) | Good (102) |
| Viscosity after 1 month (mPa·s) | 1010 | 1000 | 1020 | 1010 | 610 | 2280 | 570 |
| Storage stability (number in parentheses indicates viscosity change (%)) | Good (102) | Good (99) | Good (102) | Good (101) | Good (100) | Good (101) | Good (102) |
| Turbidity | Good | Good | Good | Good | Good | Good | Good |
| Odor | Good | Good | Good | Good | Good | Good | Good |

[Table 2]

| | Comparative Example 1-1 | Comparative Example 1-2 | Comparative Example 1-3 | Comparative Example 1-4 | Comparative Example 1-5 | Comparative Example 1-6 | Comparative Example 1-7 |
|---|---|---|---|---|---|---|---|
| Resin solution | 1-8 | 1-9 | 1-10 | 1-11 | 1-12 | 1-13 | 1-14 |
| Polyurethane polyurea resin solution A (parts by mass) | 100 | 100 | 100 | 100 | | | |
| Polyurethane polyurea resin solution B (parts by mass) | | | | | 100 | | |
| Polyurethane polyurea resin solution C (parts by mass) | | | | | | 100 | |
| Polyurethane polyurea resin solution D (parts by mass) | | | | | | | 100 |
| 2,2-Bis(hydroxymethyl)butanoic acid (parts by mass) | | 0.01 | 10 | | | | |
| 2,2-Dimethylolpropanoic acid (parts by mass) | | | | | | | |
| Malic acid (parts by mass) | | | | 0.1 | 0.1 | 0.1 | 0.1 |
| Initial viscosity (mPa·s) | 980 | 980 | 980 | 980 | 590 | 2230 | 550 |
| Viscosity after addition of hydroxycarboxylic acid (mPa·s) | 980 | 990 | 1040 | 1140 | 690 | 2700 | 630 |
| Thickening (number in parentheses indicates viscosity change (%)) | Good (100) | Good (101) | Good (103) | Poor (116) | Poor (117) | Poor (121) | Poor (115) |
| Viscosity after 1 month (mPa·s) | 640 | 790 | 1040 | 1150 | 710 | 2720 | 640 |
| Storage stability (number in parentheses indicates viscosity change (%)) | Poor (65) | Fair (80) | Good (100) | Good (101) | Good (103) | Good (99) | Good (102) |
| Turbidity | Good | Good | Good | Poor | Poor | Poor | Poor |
| Odor | Good | Good | Good | Poor | Poor | Poor | Poor |

EP 2 749 602 B1

11

Example of Manufacture 5 (Preparation of Printing Ink (2-1))

A mixture of 35 parts by mass of polyurethane polyurea resin solution (1-1) prepared in Example 1-1, 30 parts by mass of titanium oxide, 20 parts by mass of ethyl acetate, and 15 parts by mass of isopropyl alcohol was milled. The mixture was then adjusted to a viscosity of 16 seconds on a #3 Zahn cup ("Zahn Viscometer" available from Rigo Co., Ltd.) with a mixture of 60 parts by mass of ethyl acetate and 40 parts by mass of isopropyl alcohol to prepare printing ink (2-1).

Example 2-1

Printing ink (2-1) was evaluated for performance by the following various tests. The results are shown in Table 3. Storage Stability Test
The initial viscosity of printing ink (2-1) and the viscosity after storage in a sealed container at 40°C for 1 month were measured by a #3 Zahn cup ("Zahn Viscometer" available from Rigo Co., Ltd.). The viscosity change was calculated and was rated on the following scale:

$$\text{Viscosity change (\%)} = [\text{viscosity after storage at 40°C for 1 month (seconds)} / \text{initial viscosity (seconds)}] \times 100$$

Good: Viscosity change is 90% or more
Fair: Viscosity change is 70% to less than 90%
Poor: Viscosity change is less than 70%

Adhesion Test

Printing ink (2-1) was printed on an OPP film, a PET film, and a nylon film by gravure printing to obtain printed films. A cellophane adhesive tape (12 mm wide, available from Nichiban Co., Ltd.) was stuck to the ink surface of each printed film. The tape was quickly removed from one end thereof in a direction perpendicular to the surface of the film, and the condition of the ink surface was rated:

Good: 90% or more by area of ink surface remains
Fair: 30% to less than 90% by area of ink surface remains
Poor: Less than 30% by area of ink surface remains Coloration Test

The coloration of printing ink (2-1) after storage in a sealed container at 40°C for 1 month was rated on the following scale:

Good: Not colored in pink
Poor: Colored in pink

Examples (2-2) to (2-7)

Printing inks (2-2) to (2-7) were prepared as in Example 2-1 except that the polyurethane polyurea resin solution used was as shown in Table 3 and were rated as in Example 2-1. The results are shown in Table 3. Comparative Examples (2-1) to (2-7)
Printing inks (2-8) to (2-14) were prepared as in Example 2-1 except that the printing inks were formulated as shown in Table 4 and were rated as in Example 2-1. The results are shown in Table 4.

[Table 3]

|  | Example 2-1 | Example 2-2 | Example 2-3 | Example 2-4 | Example 2-5 | Example 2-6 | Example 2-7 |
|---|---|---|---|---|---|---|---|
| Printing ink | 2-1 | 2-2 | 2-3 | 2-4 | 2-5 | 2-6 | 2-7 |
| Resin solution | 1-1 | 1-2 | 1-3 | 1-4 | 1-5 | 1-6 | 1-7 |

(continued)

| | Example 2-1 | Example 2-2 | Example 2-3 | Example 2-4 | Example 2-5 | Example 2-6 | Example 2-7 |
|---|---|---|---|---|---|---|---|
| Initial viscosity (seconds) | 16 | 16 | 16 | 16 | 16 | 16 | 16 |
| Viscosity after 1 month (seconds) | 17 | 18 | 18 | 17 | 17 | 18 | 17 |
| Viscosity change (%) | 106 | 113 | 113 | 106 | 106 | 113 | 106 |
| Storage stability | Good | Good | Good | Good | Good | Good | Good |
| Adhesion to OPP | Good | Good | Good | Good | Good | Good | Good |
| Adhesion to PET | Good | Good | Good | Good | Good | Good | Good |
| Adhesion to nylon | Good | Good | Good | Good | Good | Good | Good |
| Coloration | Good | Good | Good | Good | Good | Good | Good |

[Table 4]

| | Comparative Example 2-1 | Comparative Example 2-2 | Comparative Example 2-3 | Comparative Example 2-4 | Comparative Example 2-5 | Comparative Example 2-6 | Comparative Example 2-7 |
|---|---|---|---|---|---|---|---|
| Printing ink | 2-8 | 2-9 | 2-10 | 2-11 | 2-12 | 2-13 | 2-14 |
| Resin solution | 1-8 | 1-9 | 1-10 | 1-11 | 1-12 | 1-13 | 1-14 |
| Initial viscosity (seconds) | 16 | 16 | 16 | 16 | 16 | 16 | 16 |
| Viscosity after 1 month (seconds) | 10 | 12 | 18 | 17 | 17 | 17 | 18 |
| Vscosity change (%) | 63 | 75 | 113 | 106 | 106 | 106 | 113 |
| Storage stability | Poor | Fair | Good | Good | Good | Good | Good |
| Adhesion to OPP | Good | Good | Fair | Good | Good | Good | Good |
| Adhesion to PET | Good | Good | Fair | Good | Good | Good | Good |
| Adhesion to nylon | Good | Good | Fair | Good | Good | Good | Good |
| Coloration | Good | Good | Good | Poor | Poor | Poor | Poor |

## Claims

1. A resin composition containing, as essential components, a polyurethane polyurea resin (A), a polyhydroxymonocarboxylic acid (B) having an acid value of 340 to 500 mg KOH/g and a hydroxyl value of 680 to 1,300 mg KOH/g, and at least one solvent selected from the group consisting of an ester solvent (C1) and an alcohol solvent (C2), wherein the polyhydroxymonocarboxylic acid (B) is present in an amount of 0.03 to 5 parts by mass based on 100 parts by mass of nonvolatile matter in the polyurethane polyurea resin (A).

2. The resin composition according to Claim 1, wherein the polyhydroxymonocarboxylic acid (B) is a dihydroxymonocarboxylic acid.

3. The resin composition according to Claim 1, wherein the polyhydroxymonocarboxylic acid (B) is 2,2-bis(hydroxymethyl)butanoic acid or 2,2-dimethylolpropanoic acid.

4. The resin composition according to Claim 1, wherein the mass ratio [(C1)/(C2)] of the ester solvent (C1) to the alcohol solvent (C2) in the solvent is 99/1 to 30/70.

5. The resin composition according to Claim 1, wherein the ester solvent (C1) is ethyl acetate or normal propyl acetate, and the alcohol solvent (C2) is isopropyl alcohol.

6. A printing ink binder containing the resin composition according to any one of Claims 1 to 5.

7. A printing ink comprising the printing ink binder according to Claim 6.

## Patentansprüche

1. Harzzusammensetzung, die als essentielle Bestandteile ein Polyurethan-Polyharnstoffharz (A), eine Polyhydroxymonocarbonsäure (B) mit einem Säurewert von 350 bis 500 mg KOH/g und einem Hydroxylwert von 680 bis 1300 mg KOH/g und zumindest ein Lösungsmittel ausgewählt aus der Gruppe bestehend aus einem Esterlösungsmittel (C1) und einem Alkohollösungsmittel (C2) enthält, wobei die Polyhydroxymonocarbonsäure (B) in einer Menge von 0,03 bis 5 Masseteile basierend auf 100 Masseteile nicht flüchtigen Materials in dem Polyurethan-Polyharnstoffharz (A) vorhanden ist.

2. Harzzusammensetzung nach Anspruch 1, wobei die Polyhydroxymonocarbonsäure (B) eine Dihydroxymonocarbonsäure ist.

3. Harzzusammensetzung nach Anspruch 1, wobei die Polyhydroxymonocarbonsäure (B) 2,2-bis(Hydroxymethyl)butansäure oder 2,2-Dimethylolpropansäure ist.

4. Harzzusammensetzung nach Anspruch 1, wobei das Massenverhältnis [(C1)/(C2)] des Esterlösungsmittels (C1) zu dem Alkohollösungsmittel (C2) in dem Lösungsmittel 99/1 bis 30/70 beträgt.

5. Harzzusammensetzung nach Anspruch 1, wobei das Esterlösungsmittel (C1) Ethylacetat oder normal-Propylacetat ist, und das Alkohollösungsmittel (C2) Isopropylalkohol ist.

6. Drucktintenbindemittel, das die Harzzusammensetzung nach einem der Ansprüche 1 bis 5 enthält.

7. Drucktinte, die das Drucktintenbindungsmittel nach Anspruch 6 enthält.

## Revendications

1. Composition de résine contenant, à titre de composants essentiels, une résine de polyuréthane-polyurée (A), un acide polyhydroxymonocarboxylique (B) ayant un indice d'acide de 340 à 500 mg de KOH/g et un indice d'hydroxyle de 680 à 1300 mg de KOH/g, et au moins un solvant choisi dans le groupe constitué par un solvant de type ester (C1) et un solvant de type alcool (C2), dans laquelle l'acide polyhydroxymonocarboxylique (B) est présent en une quantité de 0,03 à 5 parties en poids pour 100 parties en poids des matières non volatiles dans la résine de polyuréthane-polyurée (A).

2. Composition de résine selon la revendication 1, dans laquelle l'acide polyhydroxymonocarboxylique (B) est un acide dihydroxymonocarboxylique.

3. Composition de résine selon la revendication 1, dans laquelle l'acide polyhydroxymonocarboxylique (B) est l'acide 2,2-bis(hydroxyméthyl)butanoïque ou l'acide 2,2-diméthylol-propanoïque.

4. Composition de résine selon la revendication 1, dans laquelle le rapport en poids [(C1)/(C2)] du solvant de type ester (C1) au solvant de type alcool (C2) dans le solvant est de 99/1 à 30/70.

5. Composition de résine selon la revendication 1, dans laquelle le solvant de type ester (C1) est l'acétate d'éthyle ou l'acétate de propyle normal, et le solvant de type alcool (C2) est l'alcool isopropylique.

6. Liant pour encre d'impression contenant la composition de résine selon l'une quelconque des revendications 1 à 5.

7. Encre d'impression comprenant le liant pour encre d'impression selon la revendication 6.

**EP 2 749 602 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003221539 A
- JP 3972666 B